# EUROPEAN PATENT SPECIFICATION

(11) **EP 2 884 299 B1**
(45) Date of publication and mention of the grant of the patent: **07.02.2018**
(21) Application number: 13197452.9
(22) Date of filing: 16.12.2013
(51) Int. Cl.: G01S 7/35, G01S 13/18, G01S 13/34, G01S 13/58, G01S 13/93

(54) **SPEED DETERMINATION OF A TARGET**
GESCHWINDIGKEITSBESTIMMUNG EINES ZIELS
DÉTERMINATION DE LA VITESSE D'UNE CIBLE

(43) Date of publication of application: 17.06.2015
(73) Proprietor: Autoliv Development AB, 447 83 Vårgårda (SE)
(72) Inventor: JENKINS, Alan, D-85391 ALLERSHAUSEN (DE); MOSS, Jonathan, Reading, Berkshire RG7 6PH (GB)
(74) Representative: Kransell & Wennborg KB

(56) References cited:
- WO-A1-2009/147406
- DE-A1-102012 008 350
- US-B1- 6 778 125

## Description

### TECHNICAL FIELD

Embodiments presented herein relate to determining speed of a target, and more particularly to methods, devices, computer programs, and computer program products for determining speed of a target by a frequency-modulated continuous-wave vehicular radar device.

### BACKGROUND

Frequency modulated continuous wave (FMCW) radar devices may be used for detecting presence and speed of a target.

DE 19610970 A1 discloses a radar information evaluation process on distance and speed. The process is based on a frequency modulated continuous wave system and uses the Doppler effect to measure the speed of an object. A generator sends a time-linear frequency-modulated signal from an antenna to the target object. From the target object the return signal is received by the receiving antenna. An intermediate frequency signal is then produced in a mixer and subjected to fast Fourier transformation (FFT). Evaluation uses both the phase and amplitude of the FFT. The distance of each target object can be determined from the frequency position of the maxima of one or more modulated cycles. The speed of each target can be determined after at least two cycles. Measurement of the speed enables correction of distances in relation to their Doppler displacement. Thus both speed and distance can be measured more accurately. DE 10 2012 008350 A1 teaches to remove the distance ambiguity (aliasing) using frequency shifted time delayed ramps. One issue with using high frequency FMCW radars is how to measure the true speed of a target. In general terms, the target speed may be measured by sampling the relative phase shift of the FMCW radar detection signal as bounced back from the target. Unfortunately, at high frequencies, say in the region of 77 GHz, the wavelength is small, and hence the phase shift is very large for even small movements of the target. Due to limitations on how fast measurements of the FMCW radar detection signal as bounced back from the target can be sampled, a phase shift of more than 180 degrees may appear in the sampled signal.

WO 2009/147406 is related to a moving target using an FMCW radar. In an FMCW radar, the signals are digitised at a low rate which is the same as, or a relatively low integral multiple of, the frequency modulation repetition rate. In this manner all the higher frequency components are folded back into a single range bin, and processing and memory requirements are thereby said to be considerably reduced. Particularly, it is disclosed that the return signal is digitized into two separate data sets which are digitised at the same digitisation rate but with a preset time delay between the two data sets, the data from the channels then being processed to determine the relative phase difference between the relevant target signals in the data sets, thereby to determine the pre-folded frequency of the target signal and thus an estimate of the range of said target. The preset time delay is in the description denoted Δn.

Hence, there is still a need for improved speed determination of a target.

### SUMMARY

An object of embodiments herein is to provide improved speed determination of a target.

The inventors of the enclosed embodiments have realized that the above noted phase shift of more than 180 degrees implies that there may be an uncertainty whether the target has moved forwards by half a wavelength, or moved backwards by half a wavelength. Further, this may imply that the target has moved forwards or backwards by 1.5 wavelengths. The inventors of the enclosed embodiments have further realized that the uncertainty whether the target has moved forwards or backwards by multiples of 0.5 times the wavelength implies that during the determination of the true speed of the target, it must be assumed that the true speed is the indicated speed plus-or-minus N-times an unambiguous velocity.

According to a first aspect there is presented a method for determining speed of a target. The method is performed by a frequency-modulated continuous-wave (FMCW) vehicular radar device. The method comprises acquiring a block of a ramped radar detection signal of a target. The method comprises performing a range frequency transformation on each ramp of the ramped radar detection signal, thereby producing a set of range gates. The method comprises performing a first Doppler frequency transformation on each range gate and across each ramp, thereby producing a first set of Doppler range bins. The method comprises introducing a time delay for each range gate, thereby producing a set of time delayed range gates. The method comprises performing a second Doppler frequency transformation on each time delayed range gate and across each ramp, thereby producing a second set of Doppler range bins. The method comprises determining the speed of the target by, for the block, measuring a difference between the first set of Doppler range bins and the second set of Doppler range bins.

According to a second aspect there is presented a frequency-modulated continuous-wave (FMCW) radar device. The FMCW vehicular radar device comprises a controller. The controller is arranged to acquire a block of a ramped radar detection signal of a target. The controller is arranged to perform a range frequency transformation on each ramp of the ramped radar detection signal, thereby producing a set of range gates. The controller is arranged to perform a first Doppler frequency transformation on each range gate and across each ramp, thereby producing a first set of Doppler range bins. The controller is arranged to introduce a time delay for each range gate, thereby producing a set of time delayed range gates. The controller is arranged to perform a second Doppler frequency transformation on each time delayed range gate and across each ramp, thereby producing a second set of Doppler range bins. The controller is arranged to determine the speed of the target by, for the block, measuring a difference between the first set of Doppler range bins and the second set of Doppler range bins.

Advantageously this enables accurate detection of the speed of a target.

Advantageously this enables accurate detection of the speed of a target by considering two different sampling rates.

According to an embodiment matches outside a predetermined interval are discarded. Advantageously this enables elimination of unreasonable speeds of the target. The speed may be regarded as unreasonable based on the type of target and circumstances (for example, if the target is a vehicle, such as an automotive vehicle, this would imply certain limitation on within what limits the speed may be).

According to a third aspect there is provided an automotive vehicle comprising an FMCW vehicular radar device according to the second aspect.

According to a fourth aspect there is presented a computer program for determining speed of a target, the computer program comprising computer program code which, when run on a frequency-modulated continuous-wave (FMCW) radar device, causes the FMCW vehicular radar device to perform a method according to the first aspect.

According to a fifth aspect there is presented a computer program product comprising a computer program according to the third aspect and a computer readable means on which the computer program is stored.

It is to be noted that any feature of the first, second, third, fourth and fifth aspects may be applied to any other aspect, wherever appropriate. Likewise, any advantage of the first aspect may equally apply to the second, third, fourth, and/or fifth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram showing functional modules of an FMCW vehicular radar device;
Fig 2 is a schematic diagram showing functional modules of a controller;
Fig 3 shows one example of a computer program product comprising computer readable means;
Fig 4 schematically illustrates two vehicles;
Fig 5 schematically illustrates threshold detection applied to the magnitudes of Real and Imaginary components;
Fig 6 schematically illustrates Doppler bins in a 2D Range-Doppler domain;
Fig 7 schematically illustrates candidates for the true speed of a target;
Fig 8 schematically illustrates a symmetric FMCW radar pattern;
Figs 9 and 10 schematically illustrates amplitude for different range bins; and
Figs 11 and 12 are flowcharts of methods according to embodiments.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description. Any feature or step illustrated with dashed lines should be regarded as optional.

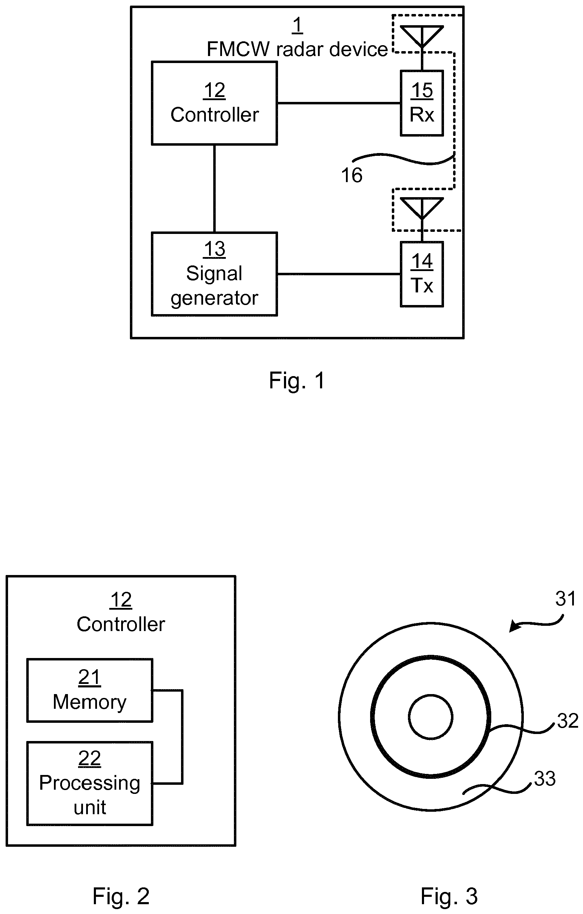

Fig 1 is a schematic diagram showing functional modules of a continuous wave frequency-modulated (FMCW) radar device 1. In general terms, FMCW radar is a short range measuring radar capable of determining distance. The FMCW vehicular radar devices provide high reliability by providing distance measurement along with speed measurement. This kind of radar device may be used as an early-warning radar, and/or a proximity sensor. Doppler shift is not always required for detection when FM modulation is used.

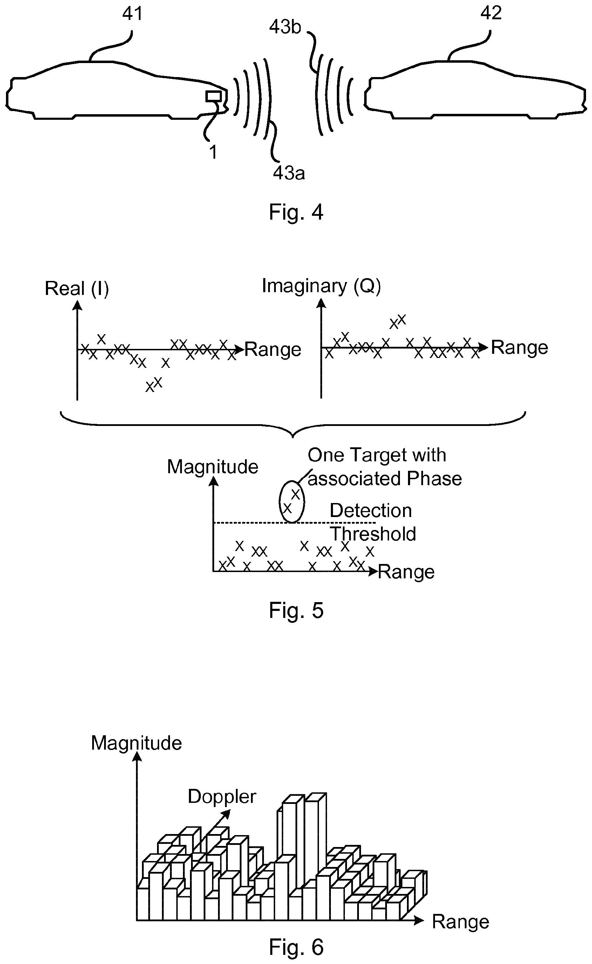

The FMCW vehicular radar device 1 comprises a controller 12 arranged to control the general operation of the FMCW vehicular radar device 1. The controller 12 is operatively connected to a signal generator 13. The FMCW vehicular radar device 1 further comprises a transmitter (Tx) 14. The Tx 14 comprises at least one antenna element. The signal generator 13 is arranged to, according to instructions provided by the controller 12, generate signals to be transmitted by the Tx 14. The FMCW vehicular radar device 1 further comprises a receiver (Rx) 15. The Rx 15 comprises at least one antenna element. The Rx 15 is arranged to receive signals and to provide the received signal to the controller 12. The controller 12 is therefore arranged to process received signals. As will be further disclosed below, this arrangement of functional modules enables measurement of the range of the object reflecting the signals by the controller 12. The antenna elements of the Tx 14 and Rx 15 may be provided in a radome 16 of the FMCW vehicular radar device 1. The FMCW vehicular radar device 1 may be part of a radar arrangement for automotive radars, such as a 77 GHz FMCW radar arrangement. Particularly, the FMCW vehicular radar device 1 may be provided in an automotive vehicle 9. Fig 4 illustrates an automotive vehicle 41 comprising an FMCW vehicular radar device 1.

General operations of the FMCW vehicular radar device 1 will now be described. In an FMCW vehicular radar device 1, a radio frequency (RF) radar detection signal 43a, frequency modulated with a given modulation waveform, is transmitted by the Tx 14 towards a target (such as a vehicle 42, see Fig 4) and reflected therefrom as a reflected radar detection signal 43b back to the FMCW vehicular radar device 1 for reception by the Rx 15. The reflected signal 43b as received at the Rx 15 is delayed in time, and hence shifted in frequency, from the instantaneous object detection signal by an amount τ proportional to the range R of the target 42. The range R corresponds to the length-wise distance from the FMCW vehicular radar device 1 to the target 42.

The signal generator 13 is arranged to generate a signal of a known stable frequency continuous wave which varies (up and/or down) in frequency over a fixed period of time by means of a modulating signal. Frequency deviation on the received signal at the Rx 15 increases with distance. The frequency deviation smears out, or blurs, the Doppler signal. Echoes from a target 42 are then mixed with the transmitted signal to produce a beat signal which will give the distance of the target 42 after demodulation.

A variety of modulations are possible; the transmitter frequency can slew up and down according to a sine wave, a sawtooth wave, a triangle wave, a square wave, and the like. For example, when the radar detection signal is modulated by a triangular wave form having a peak to peak value of ΔF and a period of 1/fₘ, the frequency shift, or difference frequency f_{R}, also commonly known as the beat frequency, as generated by a suitable filtered mixer receptive of the reflected radar detection signal and a signal indicative of the radar detection signal, is proportional to the time derivative of the frequency of the radar detection signal times the round trip time delay, τ. Therefore, the range, R, or distance between the target 42 and the FMCW vehicular radar device 1 and, additionally, the range rate of the target 42 relative to the FMCW vehicular radar device 1 is determined by the measurement of the frequency shift f_{R}. The process by which the range is determined is as such well known in the art.

The range domain allows the identification of targets 42 by the application of a threshold to the magnitude of the Real and Imaginary components as determined during Fourier transformation (such as by a Fast Fourier Transform, FFT) of the reflected signal 43b. The range is measured by applying a formula to the range gate. In general terms, range gating involves sampling the reflected signal 43b at given time-slots. Each of these points in time corresponds to a range gate in distance. Hence, the range discrimination of the radar is thereby regulated by the widths of the range gates. The exact range of the target 42 can be obtained by comparing the amplitude of the highest point of the target 42 to its neighbouring samples. This is illustrated in Fig 5. The upper part of the figure shows the Real (I) and Imaginary (Q) components. The lower part of the figure schematically illustrates how threshold detection is applied to the magnitudes of the Real (I) and Imaginary (Q) components in order to detect one target with an associated phase.

In high frequency monostatic FMCW vehicular radar devices 1 one common issue is how to determine the true speed of the target 42. In general terms, the speed of the target 42 may be measured by performing several range measurements and comparing the relative phase of the target from the range measurements. This is efficiently performed using a further FFT operation, termed "Doppler FFT", which is performed at each Doppler bin. This is schematically illustrated in Fig 6. Fig 6 illustrates an example of the magnitudes of the different Doppler bins in the 2D Range-Doppler domain. Hence finding a local maximum in the 2-dimensional Range-Doppler domain reveals both range and indicated speed of the target 42.

However, at high frequencies, such as 77 GHz, the wavelength is small (4 mm), and hence the phase shift can be very large for even small movements between adjacent samples in the 2D Range-Doppler domain. Due to limitations on how fast FMCW measurements can be taken, the phase samples may experience a phase shift of more than 180 degrees, cf. the Nyquist sampling theorem. This means that there is an uncertainty whether the target 42 has moved forwards by half a wavelength, or moved backwards by half a wavelength; or in fact whether the target 42 has moved forwards or backwards by 1.5 wavelengths (or in fact 2.5, 3.5, wavelengths, etc.). Thus, when estimating the true speed of the target 42, it has to be assumed that the true speed is the indicated speed plus or minus N times an unambiguous velocity.

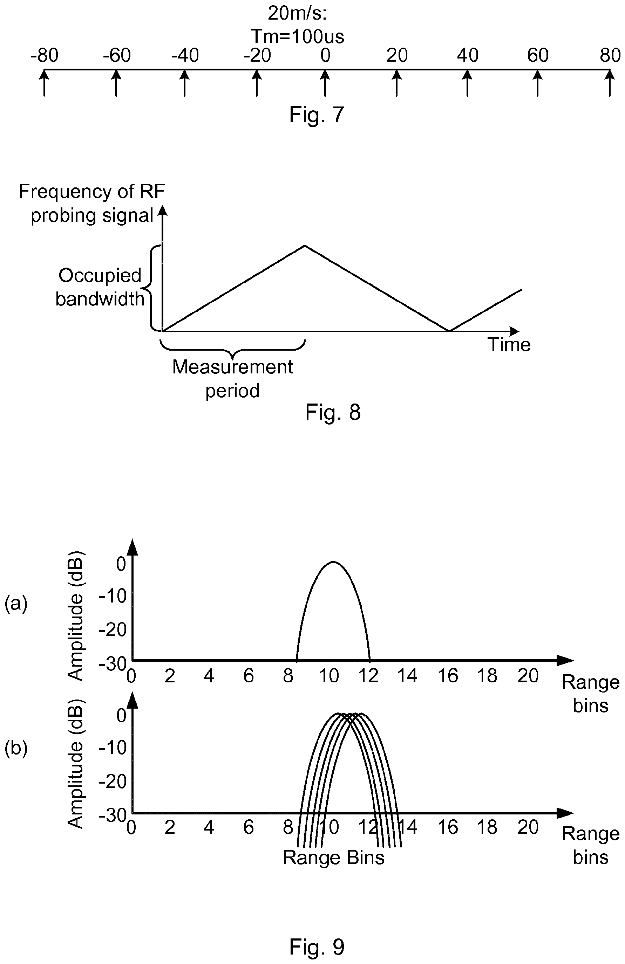

As an example, taking phase measurements at 100 µs measurement intervals would indicate a o-degree phase shift at two successive samples either when the target 42 is stationary, or when the target 42 has moved forwards or backwards by 0.5 wavelengths (remembering that the total path length is twice the distance to the target 42, see above). Thus, if the wavelength is 4 mm, the speed of the target 42 would be either o or 2⁻³/100⁻⁶ = 20 m/s. In fact a relative velocity of +/-20 · N m/s (where N is an integer) also satisfies this criteria. This is illustrated in Fig 7. Fig 7 schematically illustrates candidates for the true speed of the target 42 in a comb pattern.

A vehicular radar system, such as the FMCW vehicular radar device 1 must resolve this unknown (i.e., which value of N that is the correct one) to deliver one true speed estimation of the target 42. Different ways to resolve this will be disclosed below.

The embodiments disclosed herein thus relate to determining speed of a target. This speed represents the true speed of the target. In order to obtain determination of speed of a target there is provided an FMCW vehicular radar device 1, a method performed by the FMCW vehicular radar device 1, a computer program comprising code, for example in the form of a computer program product, that when run on an FMCW vehicular radar device 1, causes the FMCW vehicular radar device 1 to perform a method for determining speed of a target.

Fig 2 schematically illustrates, in terms of a number of functional modules, the components of the controller functional block 12 of the FMCW vehicular radar device 1 illustrated in Fig 1. A processing unit 22 is provided using any combination of one or more of a suitable central processing unit (CPU), multiprocessor, microcontroller, digital signal processor (DSP), application specific integrated circuit (ASIC), field programmable gate arrays (FPGA) etc., capable of executing software instructions stored in a computer program product 31 (as in Fig 3), e.g. in the form of a memory 21. Thus the processing unit 22 is thereby arranged to execute methods as herein disclosed. The memory 21 may also comprise persistent storage, which, for example, can be any single one or combination of magnetic memory, optical memory, solid state memory or even remotely mounted memory. The controller 12 controls the general operation of the FMCW vehicular radar device 1, e.g. by sending control signals to the signal generator 13 and receiving signals from the Rx 15. Other components, as well as the related functionality, of the controller 12 are omitted in order not to obscure the concepts presented herein.

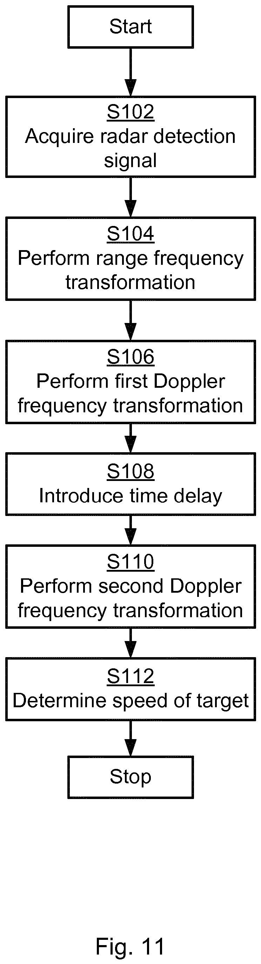

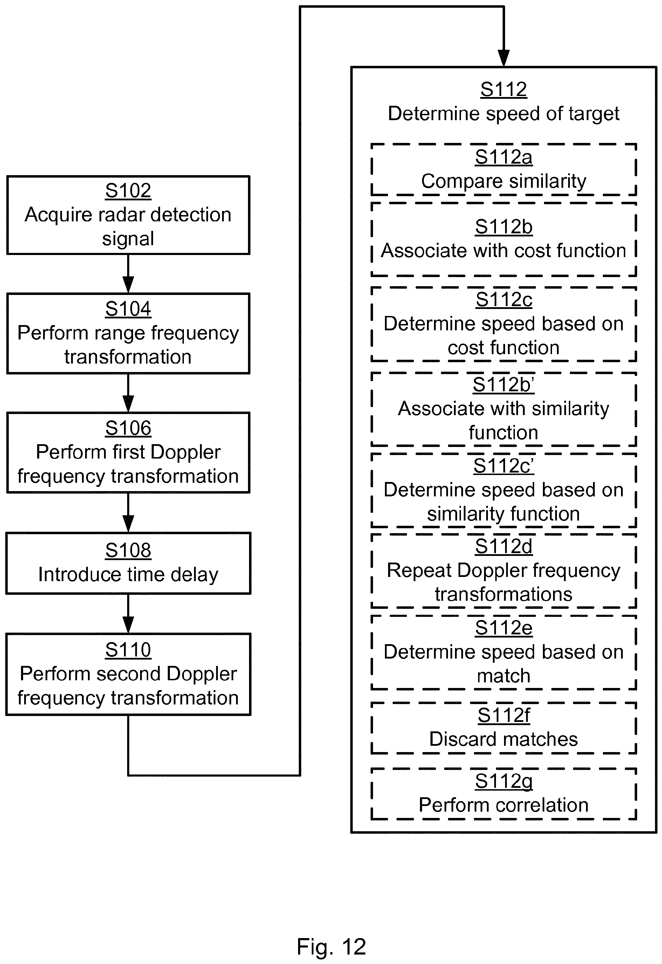

Figs 11 and 12 are flow charts illustrating embodiments of methods for determining speed of a target 42. The methods are performed by the FMCW vehicular radar device 1. The methods are advantageously provided as computer programs 32. Fig 3 shows one example of a computer program product 31 comprising computer readable means 33. On this computer readable means 33, a computer program 32 can be stored, which computer program 32 can cause the controller 12 and thereto operatively coupled entities and devices to execute methods according to embodiments described herein. In the example of Fig 3, the computer program product 31 is illustrated as an optical disc, such as a CD (compact disc) or a DVD (digital versatile disc) or a Blu-Ray disc. The computer program product 31 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory. Thus, while the computer program 32 is here schematically shown as a track on the depicted optical disk, the computer program 32 can be stored in any way which is suitable for the computer program product 31.

As noted above, the enclosed embodiments relate to speed determination of a target 42. Particularly, the enclosed embodiments relate to speed determination of a target 42 in circumstances involving an uncertainty whether the target 42 has moved forwards or backwards by multiples of 0.5 times the wavelength. This implies that during the determination of the true speed of the target, it must be assumed that the true speed is the indicated speed plus or minus N times an unambiguous velocity. There are several ways to determine N in order to resolve this uncertainty.

Reference is made to Fig 11 illustrating a method for determining speed of a target according to an embodiment. The method is performed by the FMCW radar device 1.

The controller 12 of the FMCW radar device 1 is arranged to, in a step S102, acquire a block of a ramped radar detection signal 43b of a target 42. There may be, for example, 128-256 ramps per block. The block of the ramped radar detection signal is subjected to a first frequency transformation. The first frequency transformation is a range frequency transformation and may thus be carried out by performing range FFT. Particularly, the controller 12 of the FMCW radar device 1 is arranged to, in a step S104, perform a range frequency transformation on each ramp of the ramped radar detection signal, thereby producing a set of range gates. Range FFT values may thus be obtained by performing a range FFT operation. Range FFT may be performed on each ramp in one block of the ramped radar detection signal. Fig 9 schematically illustrates amplitude (in dB) for different range bins, and where an interpolation algorithm has been used to better illustrate the true shape of the range FFT of the target return, rather than the 1 sample per bin used above, cf. Fig 6. For example, if the target is static, the range will always show up in the same position, as shown in part (a) of Fig 9. On the other hand, if the target is moving, it will move across the range bins during the observation period. This is illustrated in part (b) of Fig 9. As the time between measurements is pre-defined, the amount of movement between successive measurements can be determined.

Determination of the true speed of the target may be based on using range realignment to determine true speed. Further details relating thereto will now be disclosed. Such range realignment are based on second frequency transforms, namely a first Doppler frequency transformation and a second Doppler frequency transformation, of the block of the ramped radar detection signal. The first Doppler frequency transformation and the second Doppler frequency transformation may be carried out by performing Doppler FFTs. Particularly, the controller 12 of the FMCW radar device 1 is arranged to, in a step S106, perform a first Doppler frequency transformation on each range gate and across each ramp, thereby producing a first set of Doppler range bins. Range-Doppler FFT values are thus obtained by performing a Doppler FFT for each range gate of the range FFT values, see Fig 6.

Before the second Doppler frequency transformation is performed, the range gates are time delayed. The controller 12 of the FMCW radar device 1 is thus arranged to, in a step S108, introduce a time delay for each range gate, thereby producing a set of time delayed range gates. A second Doppler frequency transformation is then performed on the time delayed range gates. Particularly, the controller 12 of the FMCW radar device 1 is arranged to, in a step S110, perform a second Doppler frequency transformation on each time delayed range gate and across each ramp, thereby producing a second set of Doppler range bins.

The speed of the target may now be determined based on the first set of Doppler range bins and the second set of Doppler range bins. For example, if the Doppler FFT is performed across a number of successive measurements (i.e., over a number of ramps) to yield a result similar to that of Fig 6, the range will appear blurred and the combined signal at the peak will be reduced, but the Doppler value, and hence indicated speed will be well-defined. As the true speed must be one of a small number of hypothesis relative to the indicated speed, the range may be de-blurred prior to performing Doppler FFT. Particularly, the controller 12 of the FMCW radar device 1 is arranged to, in a step S112, determine the speed of the target by, for the block, measuring a difference between the first set of Doppler range bins and the second set of Doppler range bins.

The observation period may be dependent on the time elapsed between measuring the first set of values from the range radar data measurements and measuring the second set of values from the range radar data measurements. The observation period may be identical to this elapsed time.

Further details of determining speed of a target as performed by the FMCW radar device 1 will now be disclosed with reference to the flowchart of Fig 12.

There may be different ways to perform the step of determining, as in step 112. Different embodiments relating thereto will now be described in turn.

One embodiment involves correcting a range displacement. This embodiment is based on using a radar detection signal 43a based on a ramp waveform. As noted above, the ramped radar detection signal is a reflected object detection signal. The object detection signal is a ramped signal, such as an up chirp ramp signal. In more detail, after performing the range FFT as disclosed above, the speed may be determined using the relation that the true speed is equal to the indicated speed +/- N times the unambiguous velocity. To solve for the value of N, the fact that the target 42 will move slightly from one measurement to the next across a limited number of ramps may be used. As a non-limited example, the number of ramps may be 128 or 256. Correcting this small range displacement, as in step S108, for all possible values of N will result in a reinforced signal output for the correct value of N. This in turn will yield the correct true speed of the target 42. In general terms, the more ramps that are used, and/or the longer ramps that are used, the more accurate the result may be. The procedure may comprise performing correlation from one ramp to the next, and/or considering how wide the effective blurring of the target is. According to such a variation the controller 12 of the FMCW radar device 1 is arranged to, in an optional step S112g, perform correlation from one ramp to a next ramp of the ramped radar detection signal.

For example, the radar detection signal 43a may, on one ramp, first increases in frequency, and then, on the next ramp, decreases in frequency. This procedure produces an up-sweep ramp followed by a down-sweep ramp. This is illustrated in Fig 8. Fig 8 schematically illustrates a symmetric FMCW radar pattern, its measurement period on the up-sweep ramp and its occupied bandwidth. This has the effect of producing slightly different ranges for the same target 42. The degree of difference in ranges can be mapped directly to the speed of the target 42. A static target 42 would appear at the same range for both up-sweep and down-sweep. However if the target 42 is approaching the FMCW vehicular radar device 1, it will appear slightly closer due to the Doppler shift on the up-sweep ramp and slightly further away on the down-sweep ramp. The degree of difference in ranges can be mapped directly to the speed of the target 42.

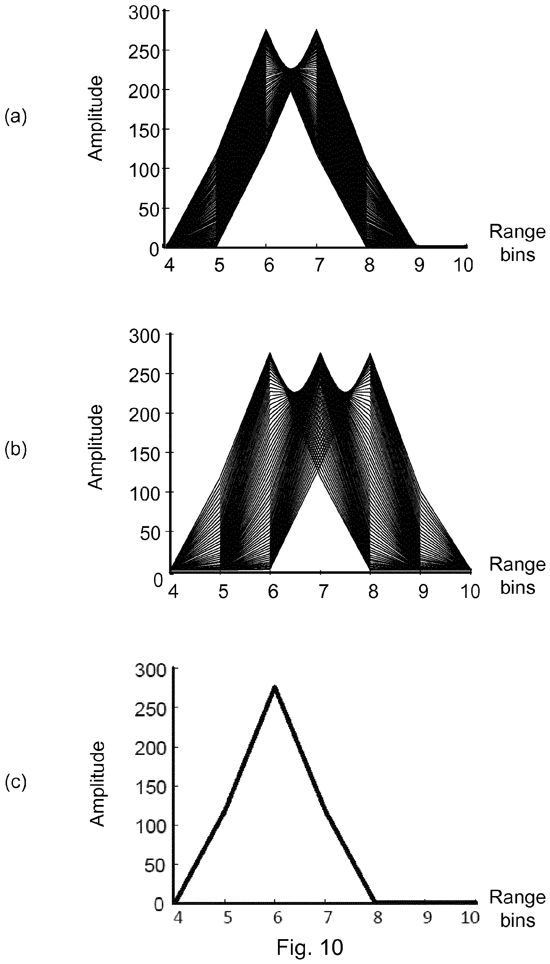

If the true speed of the target is larger than the unambiguous Doppler velocity then the indicated speed would wrap-round (aliases), thus indicating a potentially lower speed than the true speed of the target. The target appears to be blurred in the range domain (i.e., after having performed the range frequency transformation as in step S104), which would then average to a low value. This is illustrated in Fig 10 (a). Hypothesis testing may then be applied to resolve for the true speed of the target (involving performing the Doppler frequency transformation as in steps S106 and S108). In Fig 10 (b) the blur has increased in comparison to Fig 10 (a). This would indicate a wrong hypothesis. A further hypothesis of the true speed of the target should thus be tested in order to determine the correct true speed of the target. In Fig 10 (c) the blur has decreased in comparison to Fig 10 (a). This would indicate a correct hypothesis. The correct true speed of the target would thus correspond to that of range bin with index 6 for all FMCW frequency chirps.

One variation for determining the speed of the target involves comparison of similarity, such as correlation. In more detail, a further procedure may be applied which compares similarity or correlation across a sequence of increasingly delayed signals to minimize a cost function. This variation may involve a number of steps to be performed. Accordingly, the controller 12 of the FMCW radar device 1 may be arranged to, in an optional step S112a, compare similarity across a sequence of increasing time delay between of increasing time delays of said set of range gates and said set of time delayed range gates between the first set of Doppler range bins and the second set of Doppler range bins. According to a first example the controller 12 of the FMCW radar device 1 is then arranged to, in an optional step S112b, associate the comparisons made at each time delay with a value of a cost function. The cost function may be related to distance. According to the first example the FMCW radar device 1 is further arranged to, in an optional step S112C, determine the speed of the target based on the time delay associated with a minimum value of the cost function. The speed of the target may thus be determined by the time delay between the first set of Doppler range bins and the second set of Doppler range bins resulting in the smallest squared error between the first set of Doppler range bins and the second set of Doppler range bins. According to a second example the controller 12 of the FMCW radar device 1 is arranged to, in an optional step S112b', associate the comparisons made at each time delay with a value of a similarity function. The similarity function may be related to correlation. According to the second example the FMCW radar device 1 is further arranged to, in an optional step S108c', determine the speed of the target based on the time delay associated with a maximum value of the similarity function. The speed of the target may thus be determined by the time delay between the first set of Doppler range bins and the second set of Doppler range bins resulting in the largest correlation between the first set of Doppler range bins and the second set of Doppler range bins.

One variation involves repeating the Doppler FFT. In more detail, since the true speed is one element in a finite set of possibilities, the changes in range may be corrected and the Doppler FFT may be repeated for the corrected changes. Alternatively, a simpler magnitude function could be used, for example a sum of signal magnitudes. For the true speed, the peak of the signal will appear reinforced and the blurring will be reduced. According to this variation the controller 12 of the FMCW radar device 1 is arranged to, in an optional step S112d, repeat the first Doppler frequency transformation and the second Doppler frequency transformation. According to this variation the controller 12 of the FMCW radar device 1 is further arranged to, in an optional step S112e, determine the speed of the target based on a largest match between the repeated Doppler frequency transformations at each of the first set of Doppler range bins and the second set of Doppler range bins.

One embodiment involves discarding unreasonable matches. According to this embodiment the controller 12 of the FMCW radar device 1 is arranged to, in an optional step S112f, discard matches outside a predetermined interval.

In summary there have been disclosed methods for determining speed of a target 42. According to some of the above general embodiments above such a method comprises: acquiring a radar detection signal 43b of a target 42, the radar detection signal comprising range radar data measurements of the target; performing a first set of measurements over a first set of values from the range radar data measurements; performing a second set of measurements over a second set of values from the range radar data measurements, where the second set of measurements involves determination of two parameters; and determining the speed of the target by comparing the two parameters.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for determining speed of a target (42), the method being performed by a frequency-modulated continuous-wave, FMCW, vehicular radar device (1), comprising the steps of:
acquiring (S102) a block of a ramped radar detection signal (43b) of a target (42);
performing (S104) a range frequency transformation on each ramp of the ramped radar detection signal, thereby producing a set of range gates;
performing (S106) a first Doppler frequency transformation on each range gate and across each ramp, thereby producing a first set of Doppler range bins;
introducing (S108) a time delay for each range gate, thereby producing a set of time delayed range gates;
performing (S110) a second Doppler frequency transformation on each time delayed range gate and across each ramp, thereby producing a second set of Doppler range bins; and
determining (S112) the speed of the target by, for said block, measuring a difference between the first set of Doppler range bins and the second set of Doppler range bins, **characterized in that**, during the step of determining:
comparing (S112a) similarity across a sequence of increasing values of said time delay of said set of range gates and said set of time delayed range gates between the first set of Doppler range bins and the second set of Doppler range bins;
associating (S112b) said comparing at each time delay value with a value of a cost function; and
determining (S112c) the speed of the target based on the time delay associated with a minimum value of the cost function.

2. The method according to claim 1, further comprising, during the step of determining:
associating (S112b') said comparing at each time delay value with a value of a similarity function; and
determining (S112c') the speed of the target based on the time delay associated with a maximum value of the similarity function.

3. The method according to any one of the preceding claims, further comprising, during the step of determining:
repeating (S112d) said first Doppler frequency transformation and said second Doppler frequency transformation for at least one set of further time delayed range gates; and
determining (S112e) the speed of the target based on a largest match between the repeated Doppler frequency transformations at each of the first set of Doppler range bins and the second set of Doppler range bins.

4. The method according to claim 3, further comprising, during the step of determining:
discarding (S112f) matches outside a predetermined interval.

5. The method according to any one of the preceding claims, further comprising, during the step of determining:
performing (S112g) correlation from one ramp to a next ramp of the ramped radar detection signal.

6. The method according to any one of the preceding claims wherein the ramped radar detection signal is a reflected ramped object detection signal, said ramped object detection signal being an up chirp ramp signal.

7. The method according to any one of the preceding claims, wherein said block comprises between 128 and 256 ramps.

8. The method according to any one of the preceding claims, wherein the radar detection signal is a 77 GHz automotive radar detection signal.

9. The method according to any one of the preceding claims, wherein the target is a vehicle.

10. A frequency-modulated continuous-wave, FMCW, radar device (1) for determining speed of a target (42), the FMCW, radar device comprising a controller (12) arranged to:
acquire a block of a ramped radar detection signal (43b) of a target (42);
perform a range frequency transformation on each ramp of the ramped radar detection signal, thereby producing a set of range gates;
perform a first Doppler frequency transformation on each range gate and across each ramp, thereby producing a first set of Doppler range bins;
introduce a time delay for each range gate, thereby producing a set of time delayed range gates;
perform a second Doppler frequency transformation on each time delayed range gate and across each ramp, thereby producing a second set of Doppler range bins; and
determine the speed of the target by, for said block, measuring a difference between the first set of Doppler range bins and the second set of Doppler range bins, **characterized in that** the FMCW vehicular radar device is arranged to, during the step of determining:
compare similarity across a sequence of increasing values of said time delay of said set of range gates and said set of time delayed range gates between the first set of Doppler range bins and the second set of Doppler range bins;
associate said comparing at each time delay value with a value of a cost function; and
determine the speed of the target based on the time delay associated with a minimum value of the cost function.

11. An automotive vehicle (41) comprising an FMCW vehicular radar device (1) according to claim 10.

12. A computer program (32) for determining speed of a target (42), the computer program comprising computer program code which, when run on a frequency-modulated continuous-wave, FMCW, radar device (1), causes the FMCW vehicular radar device to:
acquire (S102) a block of a ramped radar detection signal (43b) of a target (42);
perform (S104) a range frequency transformation on each ramp of the ramped radar detection signal, thereby producing a set of range gates;
perform (S106) a first Doppler frequency transformation on each range gate and across each ramp, thereby producing a first set of Doppler range bins;
introduce (S108) a time delay for each range gate, thereby producing a set of time delayed range gates;
perform (S110) a second Doppler frequency transformation on each time delayed range gate and across each ramp, thereby producing a second set of Doppler range bins; and
determine (S112) the speed of the target by, for said block, measuring a difference between the first set of Doppler range bins and the second set of Doppler range bins, **characterized in that** the FMCW vehicular radar device is caused to, during the step of determining:
compare (S112a) similarity across a sequence of increasing values of said time delay of said set of range gates and said set of time delayed range gates between the first set of Doppler range bins and the second set of Doppler range bins;
associate (S112b) said comparing at each time delay value with a value of a cost function; and
determine (S112c) the speed of the target based on the time delay associated with a minimum value of the cost function.

13. A computer program product (31) comprising a computer program (32) according to claim 12 and a computer readable means (33) on which the computer program is stored.

## Patentansprüche

1. Verfahren zum Bestimmen der Geschwindigkeit eines Ziels (42), wobei das Verfahren durch ein frequenzmoduliertes Fahrzeug-Dauerstrichradargerät (1) ausgeführt wird, umfassend folgende Schritte:
Erhalten (S102) eines Blocks eines gerampten Radardetektionssignals (43b) eines Ziels (42);
Ausführen (S104) einer Frequenzbereichstransformation für jede Rampe eines gerampten Radardetektionssignals, dadurch Erzeugen eines Sets von Entfernungstoren;
Ausführen (S106) einer ersten Doppler-Frequenztransformation an jedem Entfernungstor und über jede Rampe, dadurch Erzeugen eines Sets von Doppler-Entfernungszellen;
Einführen (S108) einer Zeitverzögerung für jedes Entfernungstor, dadurch Erzeugen eines Sets zeitverzögerter Entfernungstore;
Ausführen (S110) einer zweiten Doppler-Frequenztransformation an jedem zeitverzögerten Entfernungstor und über jede Rampe, dadurch Erzeugen eines zweiten Sets Doppler-Entfernungszellen; und
Bestimmen (S112) der Geschwindigkeit des Ziels für diesen Block durch Messen einer Differenz zwischen dem ersten Set Doppler-Entfernungszellen und dem zweiten Set Doppler-Entfernungszellen, **dadurch gekennzeichnet, dass** während der Bestimmungsschritts Folgendes ausgeführt wird:
Vergleichen (S112a) von Ähnlichkeit über eine Sequenz steigender Werte der Zeitverzögerung der Entfernungstore und des Sets zeitverzögerter Entfernungstore zwischen dem ersten Set Doppler-Entfernungszellen und dem zweiten Set Doppler-Entfernungszellen;
Verknüpfen (S112b) des Vergleichs für jeden Zeitverzögerungswert mit einem Wert einer Kostenfunktion; und
Bestimmen (S112c) der Geschwindigkeit des Ziels basierend auf der Zeitverzögerung, die mit einem Minimalwert der Kostenfunktion verknüpft ist.

2. Verfahren nach Anspruch 1, ferner während des Bestimmungsschritts umfassend:
Verknüpfen (S112b') des Vergleichs bei jedem Zeitverzögerungswert mit einem Wert einer Ähnlichkeitsfunktion; und
Bestimmen (S112c') der Geschwindigkeit des Ziels basierend auf der Zeitverzögerung, die mit einem Maximalwert der Ähnlichkeitsfunktion verknüpft ist.

3. Verfahren nach einem der vorangehenden Ansprüche, ferner während des Bestimmungsschritts umfassend:
Wiederholen (S112d) der ersten Doppler-Frequenztransformation und der zweiten Doppler-Frequenztransformation für mindestens ein Set weiterer zeitverzögerter Entfernungstore; und
Bestimmen (S112e) der Geschwindigkeit des Ziels basierend auf einer größten Übereinstimmung zwischen den wiederholten Doppler-Frequenztransformationen an jedem des ersten Sets Doppler-Entfernungszellen und des zweiten Sets Doppler-Entfernungszellen.

4. Verfahren nach Anspruch 3, ferner während des Bestimmungsschritts umfassend:
Verwerfen (S112f) von Übereinstimmungen außerhalb eines festgelegten Intervalls.

5. Verfahren nach einem der vorangehenden Ansprüche, ferner während des Bestimmungsschritts umfassend:
Ausführen (S112g) einer Korrelation von einer Rampe zu einer nächsten Rampe des gerampten Radardetektionssignals.

6. Verfahren nach einem der vorangehenden Ansprüche, wobei das gerampte Radardetektionssignal ein reflektiertes geramptes Objektdetektionssignal ist, wobei das gerampte Objektdetektionssignal ein Chirp-Rampensignal ist.

7. Verfahren nach einem der vorangehenden Ansprüche, wobei der Block 128 bis 256 Rampen umfasst.

8. Verfahren nach einem der vorangehenden Ansprüche, wobei das Radardetektionssignal ein 77-GHz-Fahrzeug-Radardetektionssignal ist.

9. Verfahren nach einem der vorangehenden Ansprüche, wobei das Ziel ein Fahrzeug ist.

10. Frequenzmoduliertes Dauerstrichradargerät (1) zum Bestimmen der Geschwindigkeit eines Ziels (42), wobei das frequenzmodulierte Dauerstrichradargerät einen Controller (12) umfasst, der für Folgendes ausgelegt ist:
Erhalten eines Blocks eines gerampten Radardetektionssignals (43b) eines Ziels (42);
Ausführen einer Frequenzbereichstransformation für jede Rampe des gerampten Radardetektionssignals, dadurch Erzeugen eines Sets von Entfernungstoren;
Ausführen einer ersten Doppler-Frequenztransformation an jedem Entfernungstor und über jede Rampe, dadurch Erzeugen eines Sets von Doppler-Entfernungszellen;
Einführen einer Zeitverzögerung für jedes Entfernungstor, dadurch Erzeugen eines Sets zeitverzögerter Entfernungstore;
Ausführen einer zweiten Doppler-Frequenztransformation an jedem zeitverzögerten Entfernungstor und über jede Rampe, dadurch Erzeugen eines zweiten Sets Doppler-Entfernungszellen; und
Bestimmen der Geschwindigkeit des Ziels für diesen Block durch Messen einer Differenz zwischen dem ersten Set Doppler-Entfernungszellen und dem zweiten Set Doppler-Entfernungszellen, **dadurch gekennzeichnet, dass** das frequenzmodulierte Fahrzeug-Dauerstrichradargerät ausgelegt ist, während des Bestimmungsschritts Folgendes auszuführen:
Vergleichen von Ähnlichkeit einer Sequenz steigender Werte der Zeitverzögerung des Sets von Entfernungstoren und des Sets zeitverzögerter Entfernungstore zwischen dem ersten Set Doppler-Entfernungszellen und dem zweiten Set Doppler-Entfernungszellen;
Verknüpfen des Vergleichs für jeden Zeitverzögerungswert mit einem Wert einer Kostenfunktion; und
Bestimmen der Geschwindigkeit des Ziels basierend auf der Zeitverzögerung, die mit einem Minimalwert der Kostenfunktion verknüpft ist.

11. Automobilfahrzeug (41), umfassend ein frequenzmoduliertes Fahrzeug-Dauerstrichradargerät (1) nach Anspruch 10.

12. Computerprogramm (32) zum Bestimmen der Geschwindigkeit eines Ziels (42), wobei das Computerprogramm einen Computerprogramm-Code umfasst, der bei Ausführung auf einem frequenzmodulierten Dauerstrichradargerät (1) bewirkt, dass das modulierte Fahrzeug-Dauerstrichradargerät Folgendes ausführt:
Erhalten (S102) eines Blocks eines gerampten Radardetektionssignals (43b) eines Ziels (42);
Ausführen (S104) einer Frequenzbereichstransformation für jede Rampe eines gerampten Radardetektionssignals, dadurch Erzeugen eines Sets von Entfernungstoren;
Ausführen (S106) einer ersten Doppler-Frequenztransformation an jedem Entfernungstor und über jede Rampe, dadurch Erzeugen eines Sets von Doppler-Entfernungszellen;
Einführen (S108) einer Zeitverzögerung für jedes Entfernungstor, dadurch Erzeugen eines Sets zeitverzögerter Entfernungstore;
Ausführen (S110) einer zweiten Doppler-Frequenztransformation an jedem zeitverzögerten Entfernungstor und über jede Rampe, dadurch Erzeugen eines zweiten Sets Doppler-Entfernungszellen; und
Bestimmen (S112) der Geschwindigkeit des Ziels für diesen Block durch Messen einer Differenz zwischen dem ersten Set Doppler-Entfernungszellen und dem zweiten Set Doppler-Entfernungszellen, **dadurch gekennzeichnet, dass** das frequenzmodulierte Fahrzeug-Dauerstrichradargerät während der Bestimmungsschritte Folgendes ausführt:
Vergleichen (S112a) von Ähnlichkeit über eine Sequenz steigender Werte der Zeitverzögerung des Sets von Entfernungstoren und des Sets zeitverzögerter Entfernungstore zwischen dem ersten Set Doppler-Entfernungszellen und dem zweiten Set Doppler-Entfernungszellen;
Verknüpfen (S112b) des Vergleichs für jeden Zeitverzögerungswert mit einem Wert einer Kostenfunktion; und
Bestimmen (S112c) der Geschwindigkeit des Ziels basierend auf der Zeitverzögerung, die mit einem Minimalwert der Kostenfunktion verknüpft ist.

13. Computerprogramm-Produkt (31), umfassend ein Computerprogramm (32) nach Anspruch 12 und eine computerlesbare Vorrichtung (33), auf der das Computerprogramm gespeichert ist.

## Revendications

1. Procédé de détermination de la vitesse d'une cible (42), le procédé étant mis en oeuvre par un dispositif de radar pour véhicule à onde continue modulée en fréquence (FMCW, frequency-modulated continuous-wave) (1) comprenant les étapes consistant à :
acquérir (S102) un bloc d'un signal de détection radar en rampes (43b) d'une cible (42) ;
effectuer (S104) une transformation de fréquence de distance sur chaque rampe du signal de détection radar en rampes, en produisant ainsi un ensemble de fenêtres distances :
effectuer (S106) une première transformation de fréquence Doppler sur chaque fenêtre distance et sur la totalité de chaque rampe, en produisant ainsi un premier ensemble de cellules distances Doppler ;
introduire (S108) un délai pour chaque fenêtre distance, en produisant ainsi un ensemble de fenêtres distances différées ;
effectuer (S110) une seconde transformation de fréquence Doppler sur chaque fenêtre distance différée et sur la totalité de chaque rampe, en produisant ainsi un second ensemble de cellules distances Doppler ; et
déterminer (S112) la vitesse de la cible par, pour ledit bloc, mesure d'une différence entre le premier ensemble de cellules distances Doppler et le second ensemble de cellules distances Doppler, **caractérisé par,** pendant l'étape de détermination :
la comparaison (S112a) de similitude sur la totalité d'une séquence de valeurs croissantes dudit délai dudit ensemble de fenêtres distances et dudit ensemble de fenêtres distances différées entre le premier ensemble de cellules distances Doppler et le second ensemble de cellules distances Doppler ;
l'association (S112b) de ladite comparaison à chaque valeur de délai à une valeur de fonction de coût ; et
la détermination (S112c) de la vitesse de la cible basée sur le délai associé à la valeur minimale de la fonction de coût.

2. Procédé selon la revendication 1, comprenant en outre, pendant l'étape de détermination :
l'association (S112b') de ladite comparaison à chaque valeur de délai à une valeur d'une fonction de similitude ; et
la détermination (S112c') de la vitesse de la cible basée sur le délai associé à la valeur maximale de la fonction de similitude.

3. Procédé selon l'une quelconque des revendications précédentes, comprenant en outre, pendant l'étape de détermination :
la répétition (S112d) de ladite première transformation de fréquence Doppler et de ladite seconde transformation de fréquence Doppler pour au moins un ensemble de fenêtres distances différées supplémentaires; et
la détermination (S112e) de la vitesse de la cible basée sur une correspondance la plus exacte entre les transformations de fréquence Doppler répétées pour chacun du premier ensemble de cellules distances Doppler et du second ensemble de cellules distances Doppler.

4. Procédé selon la revendication 3, comprenant en outre, pendant l'étape de détermination :
le rejet (S112f) des correspondances hors d'un intervalle prédéterminé.

5. Procédé selon l'une quelconque des revendications précédentes, comprenant en outre, pendant l'étape de détermination :
l'établissement (S112g) d'une corrélation entre une rampe et la rampe suivante du signal de détection radar en rampes.

6. Procédé selon l'une quelconque des revendications précédentes, dans lequel le signal de détection radar en rampes est un signal de détection d'objet en rampes réfléchi, ledit signal de détection d'objet en rampes étant un signal chirp croissant.

7. Procédé selon l'une quelconque des revendications précédentes, dans lequel ledit bloc comprend entre 128 et 256 rampes.

8. Procédé selon l'une quelconque des revendications précédentes, dans lequel le signal de détection radar est un signal de détection radar d'automobile de 77 GHz.

9. Procédé selon l'une quelconque des revendications précédentes, dans lequel la cible est un véhicule.

10. Dispositif de radar à onde continue modulée en fréquence (FMCW) (1) destiné à déterminer la vitesse d'une cible (42), le dispositif de radar à FMCW comprenant un dispositif de commande (12) conçu pour :
acquérir un bloc d'un signal de détection radar en rampes (43b) d'une cible (42) ; effectuer une transformation de fréquence de distance sur chaque rampe du signal de détection radar en rampes, en produisant ainsi un ensemble de fenêtres distances :
effectuer une première transformation de fréquence Doppler sur chaque fenêtre distance et sur la totalité de chaque rampe, en produisant ainsi un premier ensemble de cellules distances Doppler ;
introduire un délai pour chaque fenêtre distance, en produisant ainsi un ensemble de fenêtres distances différées ;
effectuer une seconde transformation de fréquence Doppler sur chaque fenêtre distance différée et sur la totalité de chaque rampe, en produisant ainsi un second ensemble de cellules distances Doppler ; et
déterminer la vitesse de la cible par, pour ledit bloc, mesure d'une différence entre le premier ensemble de cellules distances Doppler et le second ensemble de cellules distances Doppler, **caractérisé en ce que** le dispositif de radar pour véhicule à FMCW est conçu pour, pendant l'étape de détermination :
comparer la similitude sur la totalité d'une séquence de valeurs croissantes dudit délai dudit ensemble de fenêtres distances et dudit ensemble de fenêtres distances différées entre le premier ensemble de cellules distances Doppler et le second ensemble de cellules distances Doppler ;
associer ladite comparaison à chaque valeur de délai à une valeur de fonction de coût ; et
déterminer la vitesse de la cible basée sur le délai associé à la valeur minimale de la fonction de coût.

11. Véhicule automobile (41) comprenant un dispositif de radar pour véhicule à FMCW (1) selon la revendication 10.

12. Programme informatique (32) destiné à déterminer la vitesse d'une cible (42), le programme informatique comprenant un code de programme informatique, qui, lorsqu'il est exécuté sur un dispositif de radar à onde continue modulée en fréquence (1), FMCW, amène le dispositif de radar pour véhicule à FMCW à :
acquérir (S102) un bloc de signal de détection radar en rampes (43b) d'une cible (42) ;
effectuer (S104) une transformation de fréquence de distance sur chaque rampe du signal de détection en rampes, en produisant ainsi un ensemble de fenêtres distances :
effectuer (S106) une première transformation de fréquence Doppler sur chaque fenêtre distance et sur la totalité de chaque rampe, en produisant ainsi un premier ensemble de cellules distances Doppler ;
introduire (S108) un délai pour chaque fenêtre distance, en produisant ainsi un ensemble de fenêtres distances différées ;
effectuer (S110) une seconde transformation de fréquence Doppler sur chaque fenêtre distance différée et sur la totalité de chaque rampe, en produisant ainsi un second ensemble de cellules distances Doppler ; et
déterminer (S112) la vitesse de la cible par, pour ledit bloc, mesure d'une différence entre le premier ensemble de cellules distances Doppler et le second ensemble de cellules distances Doppler, **caractérisé en ce que** le dispositif de radar pour véhicule à FMCW est amené à, pendant l'étape de détermination :
comparer (S112a) la similitude sur la totalité d'une séquence de valeurs croissantes dudit délai dudit ensemble de fenêtres distances et dudit ensemble de fenêtres distances différées entre le premier ensemble de cellules distances Doppler et le second ensemble de cellules distances Doppler ;
associer (S112b) ladite comparaison à chaque délai avec une valeur de fonction de coût ; et
déterminer (S112c) la vitesse de la cible basée sur le délai associé à la valeur minimale de la fonction de coût.

13. Progiciel informatique (31) comprenant un programme informatique (32) selon la revendication 12 et un moyen lisible par ordinateur (33) sur lequel le programme informatique est stocké
